# EUROPEAN PATENT APPLICATION

(11) **EP 4 393 604 A2**
(43) Date of publication of application: **03.07.2024**
(21) Application number: 24176656.7
(22) Date of filing: 04.12.2020
(51) Int. Cl.: B05B 12/00

(54) **SENSOR KIT FOR A SPRAY GUN**

(30) Priority: 04.12.2019 NL 2024379
(62) Divisional of application: 20821434.6
(71) Applicant: Proxcontrol IP B.V., 1976 BC IJmuiden (NL)
(72) Inventor: SERRUIJS, Remy Michel, 1976 BC IJmuiden (NL); NIEUWENBURG, Ronnie Jacobus Samuel, 1976 BC IJmuiden (NL); KEIJ, Rob, 1976 BC IJmuiden (NL)
(74) Representative: V.O.

(57) **Abstract**

A sensor kit is provided to be used with a spray gun. The sensor kit may acquire relevant data while the spray gun is being used, and provide feedback to the user of the spray gun on particular parameters of the spray job such that the user in real-time can adjust his method of spraying. Furthermore, the feedback may be adjusted for different types of coatings using pre-determined data related to a specific coating. Even further, the obtained data during spraying may be sent to a remote server where data may be collected of a plurality of spray jobs using a particular type of coating. Using the obtained data during spraying, it may be possible to reconstruct what the applied coating looks like, and/or what the surface looked like on which the coating has been applied.

## Description

### FIELD OF THE INVENTION

The invention relates to a sensor kit for a spray gun.

### BACKGROUND

Spray painting is a technique of using a spray gun to spray a coating through the air onto a surface. The coating may be a paint, ink, varnish, clear coat, or any other type of coating. A spray gun may be hand-held by an operator, and it may require significant skill to apply a thin coating with consistent layer thickness.

### SUMMARY

It is preferred to provide a spray gun which may require less skill to apply a thin coating with consistent layer thickness.

A first aspect provides a sensor kit for a spray gun arranged for applying a coating to a surface, the sensor kit comprising a housing comprising a connection module arranged to connect the sensor kit to the spray gun, a sensor module, provided in the housing and arranged to obtain spray job parameter values, a processing unit, comprising an input module arranged to receive one or more reference parameter values, a comparison module arranged to compare at least part of the obtained spray job parameter values to corresponding one or more reference parameter values and to generate a comparison data signal based on the outcome of the comparison, wherein the sensor kit further comprises a user feedback module, arranged to generate a user feedback signal based on at least part of the comparison data signal.

Hence, with the sensor kit according to the first aspect, feedback may be provided to the user of a spray gun. With this feedback, the user may adjust his way of handling the spray gun to, for example, apply a coating with a more consistent layer thickness and/or better coating quality in general.

The sensor module may comprise a proximity sensor arranged for obtaining distance data indicative of a distance between the spray gun and the surface on which the coating is to be applied. The distance between the spray gun and the surface on which the coating is to be applied may be a factor affecting for example the quality of the coating on the surface and/or the thickness of the coating layer.

In embodiments, the proximity sensor may comprise an optical transmitter arranged to emit an emitted optical signal and an optical receiver for receiving a reflected optical signal as a reflection of the emitted optical signal, the proximity sensor further comprising a proximity processor arranged to determine a spray distance between the proximity sensor and the surface based on a relation between the emitted optical signal and the reflected optical signal.

The emitted optical signal may have a wavelength spectrum between 800 nm and 1200 nm, more in particular between 900 nm and 1000 nm. In embodiments, the wavelength spectrum may be chosen such that the optical signal may pass through a mist of aerosol coating substance.

The spray distance may be based on a time period between emission of the emitted optical signal and the reception of the reflected optical signal.

In embodiments, the sensor module may comprise an orientation sensor for obtaining orientation data indicative of an orientation of the spray gun. The orientation of the spray gun may be a factor affecting for example the quality of the coating on the surface and/or the thickness of the coating layer.

The orientation sensor may be arranged to determine at least one angle of the orientation sensor relative to a reference plane. The reference plane may for example be a horizontal plane, a vertical plane, or a plane corresponding to the surface on which the coating is being applied or is to be applied.

In further embodiments, the sensor module may comprise a movement sensor for obtaining movement data indicative of a movement of the spray gun. Movement of the spray gun may be a factor affecting for example the quality of the coating on the surface and/or the thickness of the coating layer.

The input module may be further arranged for receiving user identification data. As such, as an example, the sensor kit may be adapted to a certain user's preference.

The sensor kit may comprise a battery for storing electrical energy and providing electrical energy to the sensor module, and a wireless charging module for charging the battery, wherein the battery and the wireless charging module are both provided in the housing. In embodiments, the housing is substantially sealed, and as such substantially no coating, gas, fluid, and/or other particles can enter the housing.

In embodiments, any of the components comprised by the sensor kit may be provided in the housing or outside the housing. When a component is provided outside the housing, it may be comprised by an additional device such as a computer device, a smartphone, a tablet computer, or any other device. For example, the processing unit may be provided inside the housing. In another example, the user feedback module is provided in the housing.

The user feedback module may comprise at least one of a speaker module for providing an audio signal based on the feedback signal, an optical module for providing a visual signal based on the feedback signal, and a haptic module for providing a haptic signal based on the feedback signal.

A second aspect provides a sensor data arrangement comprising a sensor kit according to any of the preceding embodiments, a data processing device comprising an electronic input arranged to receive a coat identifier identifying a coating material arranged to be sprayed by means of a spray gun, an electronic query module arranged to look up, in an electronic memory, using the coat identifier, reference parameter values corresponding to the coat identifier, an electronic memory communication module arranged to retrieve the looked up reference parameter values, and an electronic data communication module arranged to transmit the retrieved reference parameter values wherein the input module of the sensor kit is arranged to receive the transmitted reference parameter values from the data processing device.

Each coating may have different properties with respect to viscosity, solvent content and therefore drying time of applied coating, colour appearance dependency on layer thickness, other properties or any combination thereof. Therefore, different coating substances may require different spray job parameter value boundaries within which ranges the spray job parameters are to be kept for the best results.

It is noted that the boundaries may be variable and dependent on some spray job parameters; if, for example, the ambient temperature is at a particular level, it may be difficult to vary the temperature. Second, at a higher temperature, the coating may be less viscous than at lower temperature. This means that at a higher temperature, the distance between the spray gun and the substrate to apply the coating on, may be larger or smaller than at lower ambient temperatures, when the coating is more viscous. Other spray job parameters reference boundaries may depend on other spray job parameters.

In embodiments, the electronic input may be further arranged to receive a user identifier, the sensor kit may comprise a sensor kit communication module arranged to transmit spray job parameter values, and the electronic data communication module is arranged to receive the transmitted spray job parameter values, wherein the sensor data arrangement may further comprise an external communication module arranged to transmit the received spray job parameter values, a sensor kit identifier and the user identifier to a data processing server.

The data collected may be coupled to a particular user identifier and assessed to parameters of a finally applied coating with respect to thickness of the coating, smoothness of the coating, another parameter of the coating or any combination thereof. Furthermore, of users known to have very good spraying skills, data may be used to update spray job parameter boundaries, which updates boundaries may be provided to a sensor kit to train less experienced operators.

A third aspect provides a spray gun arranged for applying a coating to a surface, comprising a spray gun housing, an input for receiving a coating substance, a nozzle for outputting the coating substance, and a sensor kit according to the first aspect, wherein the housing of the sensor kit is connected to the spray gun housing via the connection module.

A fourth aspect provides, in a sensor kit for a spray gun, a method for generating a feedback signal, comprising by an input module, receiving reference parameter values, and, while the spray gun is used by a sensor module, obtaining spray job parameter values, by a comparison module, comparing at least part of the obtained spray job parameter values to at least part of the received reference parameter values, by an output module, outputting a comparison data signal determined by the comparison module to a feedback module, and by the feedback module, receiving the comparison data signal and generating a feedback signal based on at least part of the comparison data signal.

In embodiments, the method according to the fourth aspect may further comprise by the input module, receiving user identification data, and by the output module, outputting at least part of the obtained spray job parameter values to a server system and at least part of the user identification data to the server system.

A fifth aspect provides, in a server system for communicating with a sensor kit for a spray gun, a method of reconstructing coating data, comprising receiving, from the sensor kit, at least one of spray job parameter values comprising distance data over a first period of time, indicative of a distance between the spray gun and a surface on which a coating has been applied, orientation data over the first period of time, indicative of an orientation of the spray gun during the application of the coating, movement data over the first period of time, indicative of movements of the spray gun during the application of the coating, the method further comprising reconstructing coating data based on at least part of the distance data, the orientation data, and the movement data.

With the method according to the fifth aspect, it may be possible to reconstruct what the applied layer of coating looks like on particular parts of the coated surface. This in turn may be used as evidence of the particular spray job.

### BRIEF DESCRIPTION OF THE FIGURES

Fig. 1 depicts a schematic overview of an embodiment of a sensor kit, a spray gun and a surface;
Fig. 2 depicts a flowchart of a method for generating a feedback signal in a sensor kit for a spray gun; and
Fig. 3 depicts a flowchart of a method for reconstructing coating data.

### DETAILED DESCRIPTION OF THE FIGURES

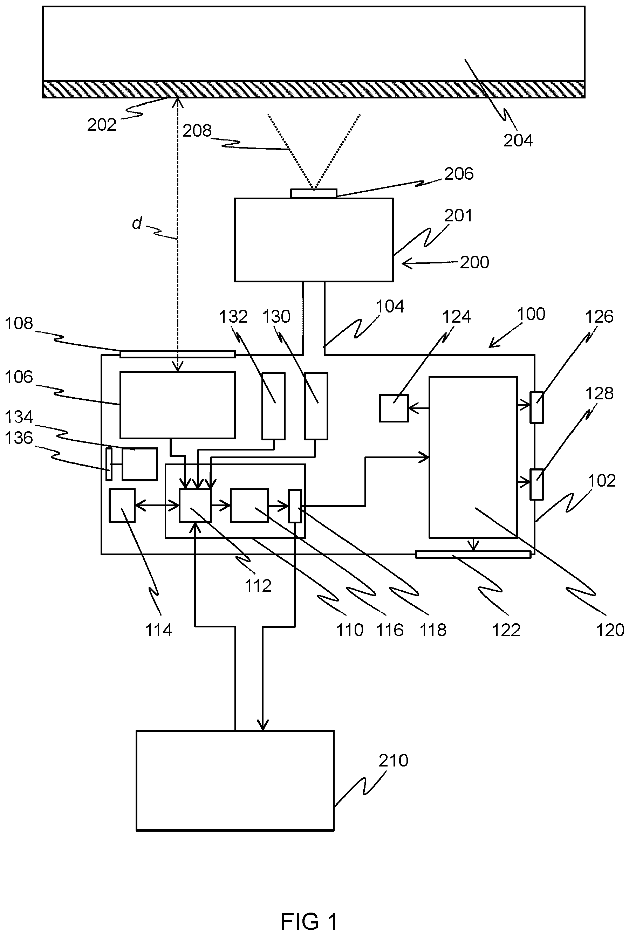

Fig. 1 depicts a schematic overview of an embodiment of a sensor kit 100 comprising a sensor kit body 102 as a housing. The sensor kit body 102 comprises a spray gun connector 104 as a connection module. A spray gun 200 is connected to the body 102 via the connector 104. The spray gun 200 comprises a spray gun housing 201. The spray gun 200 may for example be a High Volume Low Pressure (HVLP) spray gun.

Although the sensor kit body 102 is in Fig. 1 depicted schematically as a rectangle, in different embodiments the body 102 may have a different shape. For example, the body 102 can be shaped around the shape of the spray gun housing 201 to which it is arranged to be connected. The shape of the body 102 and/or centre of gravity of the sensor kit 100 may also be adapted such that, when attached to spray gun 200, the centre of gravity of the spray gun 200 is kept within a desired range. As such, handling of the spray gun 200 may be minimally affected by connecting the sensor kit 100.

The spray gun 200 may be used for applying a layer of paint 202 as a coating on a car body part 204 as a surface. The spray gun 200 comprises a nozzle 206 from which a mist of aerosol paint 208 can be expelled, and an input for receiving the paint as a coating substance. The spray gun 200 may be a hand-held spray gun 200, comprising a trigger which a user can operate to control expelling of paint 208 from the spray gun 200 at a certain rate.

The trigger may control a throughput area of a conduit leading paint or another coating fluid to the nozzle. Alternatively or additionally, the trigger - or another trigger or a control knob - may control a position of a control needle in a throughput orifice, for example the nozzle 206 or another orifice. In one embodiment, a control needle may be used to accurately control a flow of coating fluid and a trigger may be used to switch between an "on" an "off" state of the nozzle. In addition to the accurate control mechanism, the flow of coating fluid may also be control be varying pressure under which the coating fluid is provided. One or more of the precision control settings, the coating fluid pressure and the trigger state may be considered as optional spray job parameters.

The user can move and re-orientate the spray gun 200 as desired, and thus move it further away from the car body part 204 or closer to the car body part 204 with a certain speed and acceleration. The user can further orientate the spray gun 200 as desired, and thus change the orientation of the nozzle 206 relative to the car body part 204 such that paint can be applied from different angles of approach.

Provided in the sensor kit body 102 is a time-of-flight sensor 106 as a proximity sensor comprised by the sensor module. The time-of-flight sensor 106 is arranged for obtaining distance data as spray job parameter values on a distance d between the sensor 106 and the car body part 204 and/or the layer of paint 202. As such, the time-of-flight sensor 106 preferably faces in the same direction as the nozzle 206 when the sensor kit 100 is connected to the spray gun 200, as the nozzle 206 will also face the car body part 204 and/or the layer of paint 202.

The time-of-flight sensor 106 as the proximity sensor may comprises a laser or LED as an optical transmitter arranged to emit a laser beam as an emitted optical signal. The time-of-flight sensor 106 may further comprise an optical receiver for receiving a reflected optical signal as a reflection of the laser beam. A proximity processor may be used to determine a spray distance between the time-of-flight sensor 106 and the surface 204 based on a relation between the emitted laser beam and the reflected laser beam.

The emitted optical signal may have a near infrared wavelength spectrum, for example between 800 and 1200 nm, more in particular between 900 nm and 1000 nm and most preferably 940nm. Electromagnetic radiation of such wave is not visible; it may travel through substance that may seem opaque to the human eye, but is transparent for electromagnetic radiation between 900 nm and 1000 nm and 940 nm in particular.

The sensor kit body 102 may comprise non-translucent materials, and as such light emitted by the time-of-flight sensor 106 may be hindered by the sensor kit body 102. In the embodiment of Fig. 1, the sensor kit body 102 comprises as an option an at least partially translucent viewing window 108 through which light emitted by and reflected back to the time-of-flight sensor 106 can pass. Alternatively, at least part of the sensor kit body 102 through which light should pass may be made of material which is at least partially translucent for wavelengths of light used by the time-of-flight sensor 106, which may for example be wavelengths in the infra-red spectrum.

In the embodiment of Fig. 1, the sensor kit 100 comprises a microcontroller 110 as a processing unit. The microcontroller 110 comprises a data input 112 as an input module, arranged to receive one or more reference parameter values. The received reference parameter values may be stored on a memory 114. Distance data may be sent by the time-of-flight sensor 106 to the data input 112 of the microcontroller 110, and also optionally stored on the memory 114.

The microcontroller 110 is in the embodiment of the sensor kit 100 provided inside the sensor kit body 102. Embodiments of the sensor kit 100 are also envisioned wherein another microcontroller as part of the processing unit is provided outside the sensor kit body 102. This other microcontroller may for example be comprised by one or more external computer devices, such as a server, smartphone, tablet, any other computer device, or any combination thereof.

When at least part of the processing unit is provided outside the sensor kit body 102, a wired or wireless connection may be provided between the sensor module and the microcontroller 110 such that exchange of data is made possible. When a wireless connection is used, for example an NFC, Bluetooth, Wi-Fi or any other protocol can be used for exchange of data.

The microcontroller 112 as a processing unit further comprises a comparison module 116 arranged to compare at least part of the obtained spray job parameter values to corresponding one or more reference parameter values. The comparison module 116 may thus be arranged to receive at least part of the spray job parameter values and at least part of the reference parameter values, for example from the data input 112, and/or retrieve at least part of the spray job parameter values and at least part of the reference parameter values from the memory 114.

The comparison module 116 is further arranged to generate a comparison data signal based on the outcome of the comparison. The comparison data signal may be received by an output module 118, which may be arranged to and used to send the comparison data signal to other components of the sensor kit 100. In embodiments, the output module 118 may be comprised by the processing unit, the comparison module, the sensor module, or by the sensor kit 100 in general.

The data input 112 may be arranged for receiving user identification data, which may be indicative of a specific user or group of users. For example, user identification data may comprise employer data, a name, and/or any other data from which a specific user of group of user may be identified. The user identification data may be stored on the memory 114. When user identification data is stored on the memory 114, the particular sensor kit 110 may be linked to a specific user.

For providing feedback to a user using the spray gun 200 with the sensor kit 100, a feedback controller 120 as a user feedback module is comprised by the sensor kit 100. The feedback controller 120 is arranged to generate a user feedback signal based on at least part of the comparison data signal. The feedback controller 120 may further be arranged to receive at least part of the comparison data signal from the data output 118 and/or retrieve at least part of the comparison data signal from the memory 144.

In the embodiment of Fig. 1, the feedback controller 120 is provided inside the sensor kit body 102. Embodiments are also envisioned wherein at least part of the feedback controller 120 is provided outside the sensor kit body 102. In such embodiments, at least part of the generated feedback signal may be sent via a wired or wireless connection to an external feedback device, such as a speaker, display, or light.

The feedback controller 120 comprises in the embodiment of Fig. 1 a display 122, arranged for providing a visual signal based on the feedback signal. The display 122 is depicted as being placed in the sensor kit body 102. In embodiments, the display 122 may also be placed at a different location, and the display 122 may for example be a display of a smartphone, tablet, head-up display (HUD), smartwatch, smart glasses, or any other display.

For obtaining orientation data indicative of an orientation of the spray gun 200, embodiments of the sensor kit 100 may comprise an orientation sensor 130 which may be an absolute or a relative orientation sensor 130. The orientation sensor 130 may comprise a magnetometer, accelerometer, compass, gyroscope, any other sensor or any combination thereof.

The orientation data may comprise data indicative of a roll, yaw and pitch of the spray gun 200. Because the housing body 102 is preferably rigidly connected to the spray gun 200, the roll, yaw, and pitch of the orientation sensor 130 may substantially correspond to the roll, yaw, and pitch of the spray gun 200 or may at least be transformed to the roll, yaw, and pitch of the spray gun 200. Any output parameter or parameters of the orientation sensor 130 may be considered as optional spray job parameters.

Additionally or alternatively, the orientation sensor 130 is arranged to determine at least one angle of the orientation sensor relative to a reference plane. The reference plane may for example be a horizontal plane, a vertical plane, or a plane representing the surface 204 on which the coating 202 is to be applied.

For obtaining movement data indicative of a movement of the spray gun 200, embodiments of the sensor kit 100 may comprise an accelerometer 132 as an example of a movement sensor.

The movement data may comprise data indicative of a speed and/or acceleration of the spray gun 200 in one or more directions. Because the housing body 102 is preferably rigidly connected to the spray gun 200, the speed and/or acceleration of the movement sensor 132 may substantially correspond to the speed and/or acceleration of the spray gun 200 or may at least be transformed to the speed and/or acceleration of the spray gun 200. One or more of the speed and acceleration - either as scalar or vector - may be considered as optional spray job parameters.

As an option, the embodiment of the sensor kit 100 as shown in Fig. 1 comprises a speaker 126 as a speaker for providing an audio signal based on the feedback signal. Depending on the feedback signal, the audio signal may for example have a different volume and/or frequency to indicate a specific type of feedback to the user.

As a further option, the embodiment of the sensor kit 100 as shown in Fig. 1 comprises a vibration unit 128 as a haptic module for providing a vibration as a haptic signal based on the feedback signal. The vibration may be transferred via the connection 104 to the spray gun body 201 which may be held by the user of the spray gun 200. Hence, the user may feel the vibration when holding the spray gun 200.

As an even further option, embodiments of the sensor kit 100 are envisioned wherein the sensor module comprises a temperature sensor for obtaining temperature data indicative of a temperature of the surface 204 that is to be spray painted. In such embodiments, the reference parameter values may comprise a minimum temperature the surface 204 should have. If the comparison module provides a comparison data signal indicative that the temperature of the surface 204 is lower than the minimum temperature, the user feedback module may indicate to the user that the temperature of the surface 204 is too low.

For powering components of the sensor kit 100 requiring electrical energy, the sensor kit 100 may comprise a battery 134 on which electrical energy may be stored. In particular embodiments, the sensor kit housing 102 is substantially sealed, for example to prevent fluids from entering the housing and/or to prevent electrical components to be exposed to paint fumes. Being substantially sealed, it may not be possible to use a wired connection for charging the battery 134 and/or to easily replace a depleted battery.

A coil 136 as a wireless charging module for charging the battery 134 may be comprised by the sensor kit 100, and may be placed inside the sensor kit housing 102 together with the battery 134. By using for example inductive charging, electrical energy may be supplied to the battery 134 via the coil 136. Because this transfer of electrical energy is wireless, no connector has to be placed in the housing 102 and no electrical components have to be exposed to ambient air which may contain flammable coating substances in aerosols.

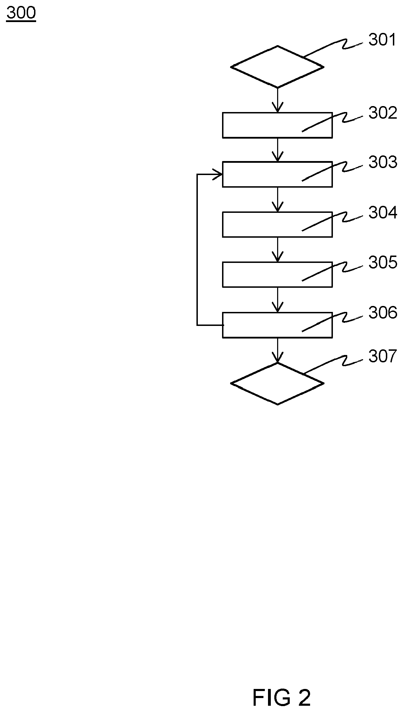

An embodiment of a method 300 for generating a feedback signal in a sensor kit for a spray gun is schematically depicted in Fig. 2, and will be elaborated on in conjunction with the sensor kit 100 as shown in Fig. 1. It will be understood that the method 300 may also be applied in conjunction with other embodiments of the sensor kit 100, and that the sensor kit 100 of Fig. 1 may be used in conjunction with other embodiments of the method 300.

The method 300 starts in a terminator 301. A second step 302 in the method comprises receiving reference parameter values, for example by the data input 112. At least part of the reference parameter values may be received from an external source, for example a server 210. The server 210 may comprise or at least have access to a memory with stored thereon a database comprises reference parameter values. In further embodiments, at least part of the reference parameter values may already be present on the memory 114 of the sensor kit 100.

The reference parameter values may comprise a set of coating types and corresponding preferred spraying parameters. Spraying parameters may be specific for a type of coatings. For example, for a particular first coating type, a preferred spraying distance between the nozzle 206 and the surface 204 lies within a first distance interval. Preferred spraying parameters may be provided to the sensor kit upon an operator selecting particular coating by means of the server 210.

The reference parameter values may in examples comprise data relating to a minimum and/or maximum speed, orientation, and/or acceleration of the spray gun 200, a minimum or maximum operating temperature and/or pressure, a minimum or maximum flow of coating fluid and/or any other data which may be relevant to a spray job or any combination thereof.

In a third step 303, spray job parameter values are obtained using at least some sensors comprised by the sensor module, for example the time-of-flight sensor 106. The third step 303 may commence after the sensor kit 100 is initialised, or when the actual spray job has started. The spray job parameter values may be obtained at a certain amount of data points per second, for a pre-determined amount of time or until it is determined that the spray job has been finished or temporarily paused.

In a fourth step 304, which may take place simultaneously with the third step 303, at least part of the spray job parameter values are compared to at least part of the received reference parameter values, for example using comparison module 116.

In a fifth step 305, which may take place simultaneously with any of the third step 303 and the fourth step 304, the comparison data signal is outputted to the feedback controller 120 as the user feedback module, for example by the data output 118. This allows the feedback controller 120 to act based on the comparison data signal, or at least a part thereof.

In a sixth step 306, which may take place simultaneously with any of the third step 303, the fourth step 304, and the fifth step 305, the comparison data signal is received by the feedback controller 120 and a feedback signal is generated based on at least part of the comparison data signal.

The method 300 ends in a terminator 307, for example when the spray job is finished. While the spray gun 200 is being used, any of the second, third, fourth, fifth and sixth steps may be repeated, optionally simultaneously, parallel and/or on a step-by-step basis, preferably real-time or at least substantially real-time such that the operator of the spray gun 200 can react to the feedback.

As an example, the method 300 will be discussed wherein the sensor kit 100 is used for providing feedback to a user using the spray gun 200 on the distance d between the sensor kit 100 and the surface 204.

The method 300 is initialised by the user connecting the sensor kit 100 to the spray gun 200. For example may the spray gun 200 be provided with a magnet, arranged to manipulate a magnetic switch comprised by the sensor kit 100 for switching on the sensor kit 100.

Next, the user selects the type of coating to be sprayed by the spray gun 200, for example by selecting this type via a graphical user interface arranged to allow user interaction with the server 210. Alternatively, the server 210 may be embodied as an application on a smartphone, tablet, personal computer device, or any other device which allows to user to select a type of coating. In embodiments a barcode scanner may be provided for scanning a barcode on a container of coating substance for obtaining data indicative of the type of coating.

Upon the user selecting the type of coating, the server 210 looks up reference parameter values corresponding to the type of coating, for example in an internal or external memory, directly or via a connection such as a LAN, WAN, internet, Wi-Fi, Bluetooth, or any other wired or wireless connection. A part of the reference parameter values may be provided locally, whereas another part of the reference parameter values may be provided at a remote location.

The server 210 sends the reference parameter values to the sensor kit 100, of which the data input 112 receives the reference parameter values and stores it on the memory 114. The reference parameter values in this example comprise a desired distance range, particular to the selected type of coating. The sensor kit 100 may aid the user in keeping the spray gun 200 within this desired distance range, by providing feedback. The desired distance range as an example of reference parameter values may have been supplied by the manufacturer of the coating.

The desired distance range may correspond to the distance between the nozzle 206 of the spray gun and the surface 204, or between any other component of the spray gun and the surface 204, or to the distance d between the time-of-flight sensor 106 and the surface 204. In any case, because the connection between the sensor kit body 102 and the spray gun 200 is preferably substantially rigid and the dimension of components of the sensor kit 100 will be known, any of these distances may be indicative for the distance between the nozzle 206 and the surface 204.

Alternatively, when the housing of the sensor kit is not substantially rigidly connected to the spray gun, a dynamic model of the substantially not rigid connection may be used for mapping data obtained by the sensor kit to data relevant to the spray gun.

During the use of the spray gun 200, which period of time may be referred to as the spray job, the time-of-flight sensor 106 obtains distance data indicative of the distance d between the time-of-flight sensor 106 and the surface 204 facing the time-of-flight sensor 106. This distance data is then used by the comparison module 116 which compares the obtained data to the desired distance range.

A result of this comparison may comprise a value indicating whether a particular data point in the distance data lies within the range, or falls outside the range. A result of this comparison may alternatively or additionally comprise a value indicating, when a particular data point falls outside the range, if the particular data point is too large, to small, and/or by what amount the data point falls outside the range.

The output module outputs the comparison data signal to the feedback controller 120, which may be arranged to provide feedback of the comparison data signal to the user using the spray gun 200. The feedback is preferably provided substantially in real-time such that the user can alter his usage of the spray gun 200 adequately in accordance with the provided feedback.

After having received the comparison data signal, the feedback controller 200 generates a feedback signal based on at least part of the comparison data signal.

In a particular embodiment, the feedback controller 200 comprises an LED-module 126 comprised by an optical module for providing a visual signal to the user based on the generated feedback signal. The LED-module 126 may comprise one or more LEDs, which may be arranged to provide light of a single colour or may be controllable to provide light of different colours, for example red, green, blue, or a combination thereof.

When an obtained distance lies within the desired distance range, the feedback controller 200 may control the LED-module 126 to show a green light as an example of coloured light. When an obtained distance falls out of the desired distance range, the feedback controller 200 may control the LED-module 126 to show a red light as an example of coloured light.

In embodiments, the feedback controller 200 comprises a display 122 as part of the optical module, arranged for providing a visual signal based on the feedback signal. The display 122 may be arranged to show a value corresponding to the actual distance data obtained by the time-of-flight sensor 106, and may thus be arranged to show numerical values corresponding for example to the measured distance in millimetres or inches. The obtained distance data may either be supplied to the display 122 directly, or via the feedback controller 200.

If the feedback controller 200 receives comparison data signals corresponding to distance data falling outside the desired range for a pre-determined amount of time, the feedback controller 200 may be arranged to generate a feedback signal to control the vibration engine 124 to provide the user with haptic feedback indicating that the desired distance has not been met for the pre-determined amount of time.

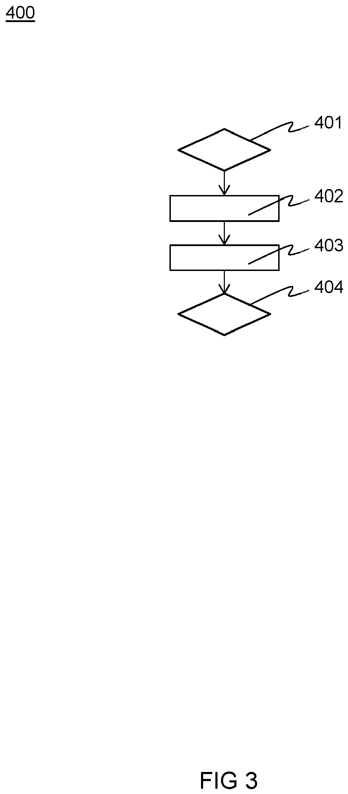

Fig. 3 depicts a method 400 of reconstructing coating data, which may be performed in a server system 210 for communicating with a sensor kit 100 for a spray gun 200, or on a different computer device such as a smartphone or tablet computer. The method starts in a terminator 401. In a second step 402, spray job parameter values are received from the sensor kit 100, for example from the data output 118.

The received spray job parameter values may comprise distance data over a first period of time, indicative of a distance between the spray gun 200 and a surface 204 on which a coating 202 has been applied. The first period of time may for example be the duration of a spray job of a particular component, such as a car body part. The spray job parameter values may further comprise orientation data over the first period of time, indicative of an orientation of the spray gun during the application of the coating, and movement data over the first period of time, indicative of movements of the spray gun during the application of the coating.

Optionally, the spray job parameter values may comprise data indicative of additional spray job parameters, such as the flow rate of the paint, ambient temperature, ambient pressure, any other relevant spray job parameter or any combination thereof.

With the orientation data, the movement data, and optionally even more spray job parameter values over the same period of time, coating data may be reconstructed in a third step 403, which may for example be indicative of how the spray gun has been handled. By also having the distance data over the same period of time, a reconstruction may be made of the surface 204 that was coated and/or of the layer of coating 202 that has been applied.

For example, the coating data may comprise data indicative of a thickness of the layer of coating 202 on different locations. The coating data may thus provide feedback to the user on the consistency of the thickness of the layer of coating that has been applied. The coating data may also provide evidence of the result of the spray job at a later time, for example to prove that a maximum thickness of a coating layer was not exceeded at a particular location on the surface 204, for example on a sensor on a car body part whose functioning may depend on the thickness of the layer of coating applied on the sensor.

In another example, the coating data may comprise data indicative of the shape of the surface 204 on which the coating has been applied. This data may be reconstructed using at least part of the distance data, the orientation data, and the movement data.

A sensor data arrangement is envisioned comprising a sensor kit 100 as described in the embodiments of this description, and a computer as a data processing device. The computer may comprise an electronic input arranged to receive a coat identifier identifying a coating material arranged to be sprayed by means of a spray gun.

For example, the electronic input is embodied as a keyboard, mouse, touch screen, bar code scanner, or any other input device for providing a data input to the computer. Via the data input, a user may provide the coat identifier to the computer.

The coat identifier may for example comprise a brand name, manufacturer name, type of coating, any other data indicative of a type of coating, or any combination thereof.

The computer as an example of a data processing device further comprises a processing unit as an electronic query module arranged to look up, in an electronic memory, using the coat identifier, reference parameter values corresponding to the coat identifier. An electronic communication module may also be comprised by the computer, and is arranged to retrieve the looked up reference parameter values, for example from a local memory or from a remote location, for example via a WAN or LAN connection.

The computer further comprises an electronic data communication module arranged to transmit the retrieved reference parameter values, for example to the input module of the sensor kit. As such, the input module of the sensor kit may be arranged to receive the transmitted reference parameter values from the data processing device.

In summary, a sensor kit is provided to be used with a spray gun. The sensor kit may acquire relevant data while the spray gun is being used, and provide feedback to the user of the spray gun on particular parameters of the spray job such that the user in real-time can adjust his method of spraying. Furthermore, the feedback may be adjusted for different types of coatings using pre-determined data related to a specific coating. Even further, the obtained data during spraying may be sent to a remote server where data may be collected of a plurality of spray jobs using a particular type of coating. Using the obtained data during spraying, it may be possible to reconstruct what the applied coating looks like, and/or what the surface looked like on which the coating has been applied.

In the description above, it will be understood that when an element such as layer, region or substrate is referred to as being "on" or "onto" another element, the element is either directly on the other element, or intervening elements may also be present. Also, it will be understood that the values given in the description above, are given by way of example and that other values may be possible and/or may be strived for.

The various aspects may be implemented in hardware, software or a combination thereof. The data to be processed may be digital or analogue or a combination thereof. In case analogue data is provided or received and digital data is required for processing, analogue to digital conversion may be used and subsequently, the digital data is processed.

Furthermore, the invention may also be embodied with less components than provided in the examples described here, wherein one component carries out multiple functions. Just as well may the invention be embodied using more elements than depicted in the Figures, wherein functions carried out by one component in the example provided are distributed over multiple components.

It is to be noted that the figures are only schematic representations of examples of the invention that are given by way of non-limiting examples. For the purpose of clarity and a concise description, features are described herein as part of the same or separate examples, however, it will be appreciated that the scope of the invention may include examples having combinations of all or some of the features described. The word 'comprising' does not exclude the presence of other features or steps than those listed in a claim. Furthermore, the words 'a' and 'an' shall not be construed as limited to 'only one', but instead are used to mean 'at least one', and do not exclude a plurality.

A person skilled in the art will readily appreciate that various parameters and values thereof disclosed in the description may be modified and that various examples disclosed and/or claimed may be combined without departing from the scope of the invention.

It is stipulated that the reference signs in the claims do not limit the scope of the claims, but are merely inserted to enhance the legibility of the claims.

## Claims

1. A sensor kit for a spray gun arranged for applying a coating to a surface, the sensor kit comprising:
- a housing comprising a connection module arranged to connect the sensor kit to the spray gun;
- a sensor module, provided in the housing and arranged to obtain spray job parameter values;
- a processing unit, comprising:
- an input module arranged to receive one or more reference parameter values;
- a comparison module arranged to compare at least part of the obtained spray job parameter values to corresponding one or more reference parameter values and to generate a comparison data signal based on the outcome of the comparison;
wherein the sensor kit further comprises a user feedback module, arranged to generate a user feedback signal based on at least part of the comparison data signal.

2. The sensor kit according to claim 1, wherein the sensor module comprises a proximity sensor arranged for obtaining distance data indicative of a distance between the spray gun and the surface on which the coating is to be applied.

3. The sensor kit according to claim 2, wherein the proximity sensor comprises an optical transmitter arranged to emit an emitted optical signal and an optical receiver for receiving a reflected optical signal as a reflection of the emitted optical signal, the proximity sensor further comprising a proximity processor arranged to determine a spray distance between the proximity sensor and the surface based on a relation between the emitted optical signal and the reflected optical signal.

4. The sensor kit according to claim 3, wherein the spray distance is based on a time period between emission of the emitted optical signal and the reception of the reflected optical signal.

5. The sensor kit according to any of the preceding claims, wherein the sensor module comprises an orientation sensor for obtaining orientation data indicative of an orientation of the spray gun.

6. The sensor kit according to claim 5, wherein the orientation sensor is arranged to determine at least one angle of the orientation sensor relative to a reference plane.

7. The sensor kit according to any of the preceding claims, wherein the sensor module comprises a movement sensor for obtaining movement data indicative of a movement of the spray gun.

8. The sensor kit according to any of the preceding claims, wherein the input module is further arranged for receiving user identification data.

9. The sensor kit according to any of the preceding claims, further comprising a battery for storing electrical energy and providing electrical energy to the sensor module, and a wireless charging module for charging the battery, wherein the battery and the wireless charging module are both provided in the housing.

10. The sensor data arrangement comprising:
- a sensor kit according to any of the preceding claims;
- a data processing device comprising:
- an electronic input arranged to receive a coat identifier identifying a coating material arranged to be sprayed by means of a spray gun;
- an electronic query module arranged to look up, in an electronic memory, using the coat identifier, reference parameter values corresponding to the coat identifier;
- an electronic memory communication module arranged to retrieve the looked up reference parameter values; and
- an electronic data communication module arranged to transmit the retrieved reference parameter values;
wherein the input module of the sensor kit is arranged to receive the transmitted reference parameter values from the data processing device and the comparison module is arranged to use the receive reference parameter values for generating comparison data.

11. The sensor data arrangement according to claim 10, wherein:
- the electronic input is further arranged to receive a user identifier;
- the sensor kit comprises a sensor kit communication module arranged to transmit spray job parameter values; and
- the electronic data communication module is arranged to receive the transmitted spray job parameter values;
the sensor data arrangement further comprising an external communication module arranged to transmit the received spray job parameter values, a sensor kit identifier and the user identifier to a data processing server.

12. A spray gun arranged for applying a coating to a surface, comprising:
- a spray gun housing;
- an input for receiving a coating substance;
- a nozzle for outputting the coating substance; and
- a sensor kit according to any of the claims 1-9, wherein the housing of the sensor kit is connected to the spray gun housing via the connection module.

13. In a sensor kit for a spray gun, in particular a spray gun according to claim 12, a method for generating a feedback signal, comprising:
- by an input module, receiving reference parameter values; and, while the spray gun is used:
- by a sensor module, obtaining spray job parameter values;
- by a comparison module, comparing at least part of the obtained spray job parameter values to at least part of the received reference parameter values;
- outputting a comparison data signal determined by the comparison module to a feedback module; and
- by the feedback module, receiving the comparison data signal and generating a feedback signal based on at least part of the comparison data signal.

14. The method according to claim 13, further comprising:
- by the input module, receiving user identification data; and
- outputting at least part of the obtained spray job parameter values to a server system and at least part of the user identification data to the server system.

15. In a server system for communicating with a sensor kit for a spray gun, in particular a sensor kit according to any one of the claims 1-9, a method of reconstructing coating data, comprising:
- receiving, from the sensor kit, spray job parameter values comprising:
- distance data over a first period of time, indicative of a distance between the spray gun and a surface on which a coating has been applied;
- orientation data over the first period of time, indicative of an orientation of the spray gun during the application of the coating;
- movement data over the first period of time, indicative of movements of the spray gun during the application of the coating;
the method further comprising reconstructing coating data based on at least part of the distance data, the orientation data, and the movement data.
